# FASCICULE DE BREVET EUROPEEN

(11) **EP 2 872 870 B1**
(45) Date de publication et mention de la délivrance du brevet: **02.06.2021**
(21) Numéro de dépôt: 13735289.4
(22) Date de dépôt: 11.07.2013
(51) Int. Cl.: G01N 15/10, G01N 15/14, C09D 171/02, C08L 71/02, C08K 5/103

(54) **SYSTÈME ET PROCÉDÉ DE DÉTECTION OPTIQUE COMPRENANT UNE COMPOSITION POUR LA DÉTECTION OPTIQUE DE PARTICULES, COMPORTANT DE L'EAU, LES PARTICULES, UN SURFACTANT ET UN POLYMÈRE HYDROPHILE**
SYSTEM UND VERFAHREN ZUR OPTISCHEN DETEKTION MIT EINER ZUSAMMENSETZUNG ZUR OPTISCHEN DETEKTION VON PARTIKELN MIT WASSER, DEN PARTIKEL, EINEM TENSID UND EINEM HYDROPHILEN POLYMER
SYSTEM AND METHOD FOR OPTICAL DETECTION INCLUDING A COMPOSITION FOR THE OPTICAL DETECTION OF PARTICLES, COMPRISING WATER, THE PARTICLES, A SURFACTANT, AND A HYDROPHILIC POLYMER

(30) Priorité: 12.07.2012 FR 1256736
(43) Date de publication de la demande: 20.05.2015
(73) Titulaire: Commissariat à l'Energie Atomique et aux Energies Alternatives, 75015 Paris (FR)
(72) Inventeur: ALLIER, Cédric, F-38000 Grenoble (FR); HENNEQUIN, Yves, 1056 SX Amsterdam (NL)
(74) Mandataire: Lavoix
(86) Numéro de dépôt international: PCT/EP2013/064669
(87) Numéro de publication internationale: WO 2014/009462

(56) Documents cités:
- WO-A1-2010/051607
- WO-A1-2011/045360
- US-A- 4 148 869

## Description

L'invention concerne un système de détection optique de particules, le système comprenant une lame transparente, une composition agencée sur la lame, une source de lumière propre à éclairer la composition et la lame, et un dispositif d'acquisition d'au moins une image de la composition éclairée par la source de lumière, la lame transparente étant disposée entre la source de lumière et le dispositif d'acquisition.

La composition pour la détection optique de particules comprend de l'eau, les particules et un surfactant, les particules présentant un diamètre de préférence inférieur à 10 µm et notamment de diamètre inférieur à 1 µm, le surfactant présentant une concentration de préférence au moins égale à la concentration micellaire critique (CMC).

L'invention concerne également un procédé de détection optique de particules à l'aide d'un tel système de détection optique.

L'invention s'applique en particulier à la détection de particules de taille micrométrique et sub-micrométrique, notamment des particules biologiques, telles que des cellules, des bactéries, ou encore des virus. L'invention s'applique également à la détection de particules en forme de microbilles.

On connaît du document WO 2011/045360 A1 un système de détection du type précité. La composition comprend des particules ou des organismes de taille micrométrique ou sub-micrométrique, de l'eau et un agent mouillant, tel que le polyoxyéthylène 20 sorbitan monolaurate, également connu sous le nom commercial de TWEEN 20.

Cette composition est déposée sous la forme d'une goutte sur la lame transparente, et des images de la goutte sont acquises lors de son évaporation. Lorsque la goutte s'évapore, la formation d'un film à la surface de la particule est observée, et ce film résiduel, recouvrant la particule, fait office de microlentille, ce qui permet d'améliorer la détection de la particule.

Toutefois, un tel système de détection ne permet pas de détecter aisément des particules dont la taille est inférieure au micromètre. En effet, en dessous de cette taille, le rapport signal sur bruit décroît.

Le but de l'invention est donc de proposer un système de détection optique de particules permettant de détecter des particules présentant un diamètre inférieur au micromètre.

A cet effet, l'invention a pour objet un système de détection optique de particules, selon la revendication 1.

Suivant d'autres aspects avantageux de l'invention, le système de détection optique est selon l'une quelconque des revendications 2 à 4.

L'invention a également pour objet un procédé de détection optique de particules, selon la revendication 5.

Suivant d'autres aspects avantageux de l'invention, le procédé de détection est selon l'une quelconque des revendications 6 à 8:
Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système de détection optique de particules, selon un premier mode de réalisation de l'invention, le système de détection comprenant une source de lumière, une lame transparente sur laquelle est agencée une composition, et un dispositif d'acquisition d'images de la composition éclairée,
- la figure 2 est une image acquise, à l'aide du système de détection de la figure 1, de la composition en forme de goutte lors de son évaporation, la composition comprenant un polymère hydrophile, des billes de 200 nm et des impuretés d'environ 1µm,
- la figure 3 est une représentation schématique du système de détection optique, selon un deuxième mode de réalisation de l'invention, le système de détection comprenant un microscope,
- la figure 4 est une représentation schématique du trajet de la lumière à travers la lame transparente et la composition avec le système de détection de la figure 3,
- les figures 5 et 6 représentent chacune une image acquise à l'aide du système de détection de la figure 3 pour une première focalisation, respectivement une deuxième focalisation, par rapport à un plan principal objet du microscope, lorsque le polymère contenu dans la composition est le polyéthylène glycol avec un nombre de motifs d'oxyéthylène égal à 13, également appelé PEG 600,
- la figure 7 est une image correspondant à la soustraction des images des figures 5 et 6,
- la figure 8 est une image de référence des mêmes particules obtenue par une imagerie moléculaire de fluorescence à l'aide du microscope,
- la figure 9 est un ensemble de courbes représentant l'intensité du signal acquis par le dispositif d'acquisition de la figure 3 pour différentes valeurs de la concentration massique du PEG 600,
- les figures 10 à 12 sont des vues analogues à celles des figures 5 à 7, lorsque le polymère contenu dans la composition est le diéthylène glycol, le nombre de motifs d'oxyéthylène étant alors égal à 2,
- la figure 13 est une vue analogue à celle de la figure 8, pour les particules détectées sur les figures 10 à 12,
- les figures 14 à 16 sont des vues analogues à celles des figures 5 à 7, lorsque le polymère contenu dans la composition est le polyéthylène glycol avec 180 motifs d'oxyéthylène, également appelé PEG 8000,
- la figure 17 est une vue analogue à celle de la figure 8, pour les particules détectées sur les figures 14 à 16.

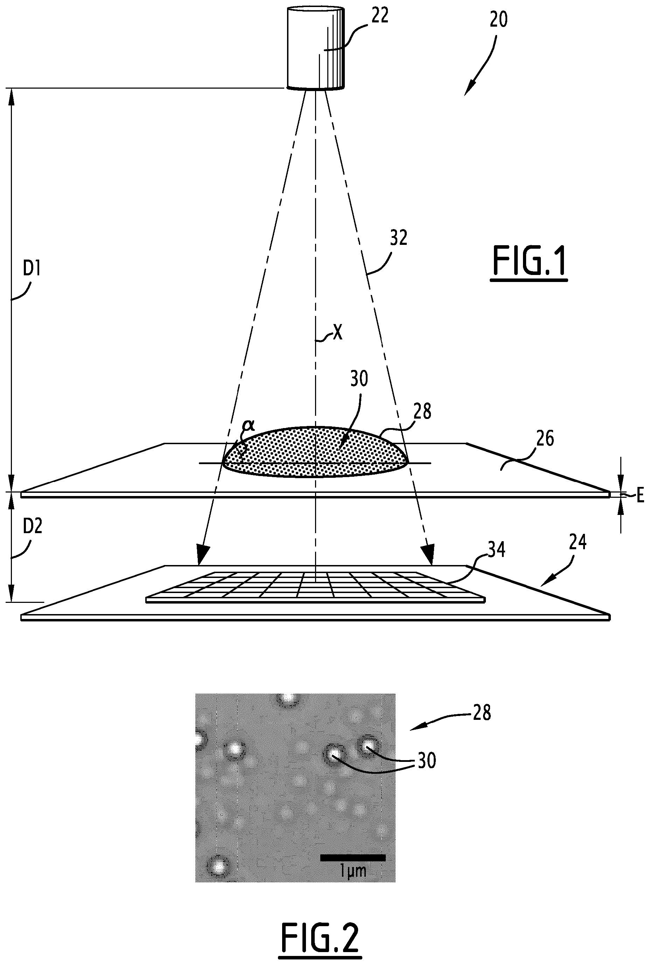

Sur la figure 1, un système de détection optique 20 comprend une source de lumière 22, un dispositif 24 d'acquisition d'images, une lame transparente 26 et une composition 28 agencée sur la lame 26, la composition 28 comportant des particules à détecter 30.

Le système de détection 20 est destiné à détecter les particules 30, celles-ci présentant un diamètre de préférence inférieur à 1 µm, lors de l'évaporation de la composition 28, la composition 28 étant déposée en forme d'une goutte sur la lame transparente 26.

La source de lumière 22 est propre à émettre un faisceau lumineux 32 selon une direction longitudinale X, afin d'éclairer la composition 28 disposée sur la lame transparente 26.

La source de lumière 22 est disposée à une première distance D1 de la lame transparente 26 selon la direction longitudinale X. La première distance D1 présente, de préférence, une valeur comprise entre 1 cm et 30 cm, par exemple égale à 10 cm.

Dans l'exemple de réalisation de la figure 1, la source de lumière 22 est une source ponctuelle. La cohérence spatiale de la source de lumière 22 est en complément améliorée, par exemple en la couplant avec un sténopé, de diamètre compris entre 50 µm et 500 µm, placé au contact de la source 22.

La source de lumière 22 est, par exemple, une diode électroluminescente, également appelée LED (de l'anglais *Light Emitting Diode*), monochromatique et présentant des dimensions suffisamment réduites pour être considérée comme spatialement cohérente, le diamètre de la diode électrode luminescente étant inférieur au dixième de la première distance D1 séparant cette diode électroluminescente de la lame 26. La diode électroluminescente de la source de lumière 22 présente, par exemple, une longueur d'onde d'émission égale à 555 nm et une puissance égale 1,7 W.

En variante, la source de lumière 22 est une source spatialement ou temporellement cohérente, telle qu'une diode laser (DL) ou encore une diode laser de type VCSEL (de l'anglais *Vertical Cavity Surface Emitting Laser*).

Le dispositif d'acquisition d'images 24 comprend un photodétecteur matriciel 34 comportant une pluralité de pixels, non représentés. Chaque pixel du photodétecteur 34 présente des dimensions inférieures ou égales à 10 µm, voire 4 µm. Chaque pixel est, par exemple, en forme d'un carré dont le côté est de valeur inférieure ou égale à 10 µm, voire à 4 µm. En variante, chaque pixel est en forme d'un carré de 2,2 µm de côté.

Le dispositif d'acquisition 24 est disposé à une deuxième distance D2 de la lame transparente 26 selon la direction longitudinale X. La deuxième distance D2 présente une valeur inférieure à 1 cm, et de préférence comprise entre 100 µm et 2 mm.

Dans l'exemple de réalisation de la figure 1, la deuxième distance D2 est égale à 500 µm. Le fait de privilégier une distance courte entre le dispositif d'acquisition 24 et la lame transparente 26 permet de limiter les phénomènes d'interférences entre différentes figures de diffraction lorsque la composition 28 est éclairée.

Le dispositif d'acquisition d'images 24 est propre à acquérir des images du rayonnement transmis par la lame 26 sur laquelle est agencée la composition 28 éclairée par le faisceau lumineux 32. Par rayonnement transmis, on entend le rayonnement traversant la composition 28 et la lame 26, de telle sorte que le dispositif d'acquisition 24 et la source de lumière 22 sont situés de part et d'autre de la lame transparente 26 et de la composition 28.

La lame transparente 26 est disposée entre la source de lumière 22 et le dispositif d'acquisition 24, et est sensiblement perpendiculaire à la direction longitudinale X.

La lame transparente 26 présente une épaisseur E selon la direction longitudinale X. L'épaisseur E est, par exemple, de valeur comprise entre 10 µm et 100 µm, de préférence comprise entre 20 µm et 50 µm.

La lame 26 est de préférence hydrophile, afin que l'angle de contact a, visible sur la figure 1, entre la composition 28 et la lame 26 présente une faible valeur. La valeur de l'angle de contact α obtenu entre la lame hydrophile 26 et la composition 28 est inférieure à 20°, de préférence inférieure à 10°, de préférence encore de l'ordre du degré.

Le caractère hydrophile de la lame 26 est, par exemple, obtenu en préparant la lame 26 selon les étapes suivantes. La première étape de préparation est une sonication dans une eau savonneuse pendant une durée de l'ordre de dix minutes. L'eau savonneuse comporte, par exemple, de l'eau et du liquide vaisselle, l'eau étant de préférence une eau pure de type 1 conforme à la norme ISO 3696, également connue sous le nom commercial de Mili-Q. La deuxième étape est une étape de rinçage à l'eau, telle qu'à l'eau Mili-Q, à l'acétone et à l'isopropanol. La troisième étape est une étape de séchage, par exemple de séchage à l'azote, et la quatrième étape est un passage au plasma oxygène pendant une durée supérieure à 15 secondes, de préférence de l'ordre de 30 secondes.

La composition 28 comprend les particules à détecter 30 et une solution, la solution comportant de l'eau, un surfactant et un polymère hydrophile. Autrement dit, la composition 28 est une dispersion des particules à détecter 30 dans une solution aqueuse comprenant de l'eau, le surfactant et le polymère hydrophile.

Dans l'exemple de réalisation décrit, la solution de la composition 28 est constituée d'eau, du surfactant et du polymère hydrophile. La composition 28 est alors constituée des particules à détecter 30, d'eau, du surfactant et du polymère hydrophile.

Le polymère hydrophile présente une température d'ébullition supérieure à celle de l'eau. Le polymère hydrophile est un polyéthylène glycol défini par la formule suivante :

H(-OCH₂CH₂-)ₙOH

où n représente le nombre de motifs d'oxyéthylène du polymère.

Le nombre n de motifs d'oxyéthylène est un nombre entier, compris entre 2 et 180, de préférence encore compris entre 4 et 16, de préférence encore égal à 13.

Comme cela sera décrit plus en détail par la suite, le nombre n de motifs est, par exemple, égal à 2, et le polymère est alors appelé diéthylène glycol, également noté DiEG.

En variante, le nombre n de motifs d'oxyéthylène est égal à 13, et le polymère hydrophile est appelé polyéthylène glycol 600, également noté PEG 600, le PEG 600 présentant un poids moléculaire de l'ordre de 600 g/mol.

Lorsque le nombre n de motifs d'oxyéthylène est égal à 13, le polymère hydrophile, à savoir le PEG 600, présente une concentration massique de préférence comprise entre 0,2 % et 0,8 %, de préférence encore comprise entre 0,4 % et 0,6 %.

En variante encore, le nombre n de motifs d'oxyéthylène est égal à 180, et le polymère hydrophile est appelé polyéthylène glycol 8000, également noté PEG 8000, le PEG 8000 présentant un poids moléculaire sensiblement égal à 8000 g/mol.

Le surfactant, également appelé tensioactif, présente une concentration de préférence au moins égale à la concentration micellaire critique (CMC). Le surfactant comporte, par exemple, du polyoxyéthylène 20 sorbitan monolaurate, également connu sous le nom commercial TWEEN20.

En variante, le surfactant comporte un copolymère de polyoxyéthylène et de polyoxypropylène, tel qu'un poloxamère, par exemple celui connu sous le nom commercial PLURONIC F-68. En variante encore, le surfactant comporte du dodécylsulfate de sodium, également appelé SDS.

Les particules à détecter 30 sont, par exemple, des particules biologiques, c'est-à-dire des cellules (par exemple des globules rouges, des globules blancs, ou des plaquettes), des composants cellulaires (par exemple des mitochondries), des bactéries, des virus ou encore tout autre molécule ou agrégats de molécule, notamment des agrégats de protéines.

En variante, les particules à détecter 30 sont des microbilles.

Les particules à détecter 30 présentent un diamètre de préférence inférieur à 1 µm, le diamètre des particules 30 étant par exemple compris entre 50 nm et 1 µm, de préférence encore compris entre 10 nm et 1 µm.

Le faisceau lumineux 32 est propre à éclairer directement la composition 28 disposée sur la lame transparente 26.

Le photodétecteur matriciel 34 est un capteur d'images en deux dimensions, à savoir dans un plan perpendiculaire à l'axe longitudinal X. Le photodétecteur matriciel 34 est un capteur d'image pixélisé, et par exemple un capteur CMOS (de l'anglais *Complementary Metal Oxyde Semi-conductor*).

En variante, le photodétecteur matriciel 34 est un capteur CCD (de l'anglais *Charged-Couple Device*).

Les images acquises par le photodétecteur matriciel 34 sont formées par le rayonnement transmis directement par la composition 28 éclairée, en l'absence d'une optique de grossissement disposée entre la lame transparente 26 et le photodétecteur matriciel 34. Cependant, cela n'exclut pas la présence de microlentilles, chacune étant couplée à un pixel correspondant du capteur, ces microlentilles permettant une meilleure collecte du signal. Le photodétecteur matriciel 34 est également appelé dispositif d'imagerie sans lentille, et est apte à former une image de la composition 28, tout en étant placé à une faible distance de cette dernière. Par faible distance, on entend une distance inférieure à 1 cm, la deuxième distance D2 étant par exemple de l'ordre de 500 µm.

Le procédé de détection optique des particules 30 va être à présent décrit.

L'étape initiale consiste à agencer, sur la lame transparente 26, la composition 28 comprenant de l'eau, le surfactant, le polymère hydrophile et les particules 30. La composition 28 est en forme d'une goutte disposée sur la lame 26. Le volume de la goutte est, par exemple, compris entre 1 µL et 20 µL.

Des images successives de la goutte contenant les particules 30 sont alors acquises à l'aide du système de détection optique 20. Lors de l'évaporation de la goutte, on observe alors la formation d'un film mouillant recouvrant les particules 30, le film mouillant présentant une épaisseur très faible, telle qu'une épaisseur de valeur comprise entre 10 nm et 5 µm.

Lorsque la composition 28 est éclairée par la source de lumière 22 dans ces conditions, le film mouillant joue alors le rôle d'une ou plusieurs microlentilles formées au-dessus des particules 30, ce qui permet d'améliorer la détection de ces particules.

L'ajout du polymère hydrophile dans la composition 28 permet de prolonger la durée pendant laquelle le film mouillant subsiste au contact des particules 30 lors de l'évaporation de la goutte. Le polymère hydrophile permet de prolonger la durée d'apparition du film, tout en conservant un étalement correct de la goutte sur la lame 26. L'angle de contact α obtenu entre la lame 26 et la composition 28 présente en effet une valeur inférieure à 20°, de préférence inférieure à 1° et 10°, de préférence encore de l'ordre du degré.

Le polymère hydrophile entraîne également une diminution de l'épaisseur du film mouillant obtenu lors de l'évaporation de la goutte, ce qui permet de détecter des particules 30 de taille plus réduite, tout en conservant un bon rapport signal sur bruit. En effet, si l'épaisseur du film mouillant est trop importante par rapport aux particules 30 que l'on souhaite détecter, alors le rapport signal sur bruit décroît.

Lorsque le surfactant présente une concentration au moins égale à la concentration micellaire critique, la goutte s'étale encore mieux, tout en présentant une vitesse d'évaporation suffisante pour permettre la formation du film.

Le système de détection 20 selon l'invention permet alors de détecter des particules 30 présentant un diamètre de très faible valeur, comme par exemple des particules présentant un diamètre de 200 nm tel qu'illustré sur l'image de la figure 2.

Dans l'exemple de réalisation de la figure 2, le polymère hydrophile est le PEG 600 avec une concentration massique égale à 0,4 %.

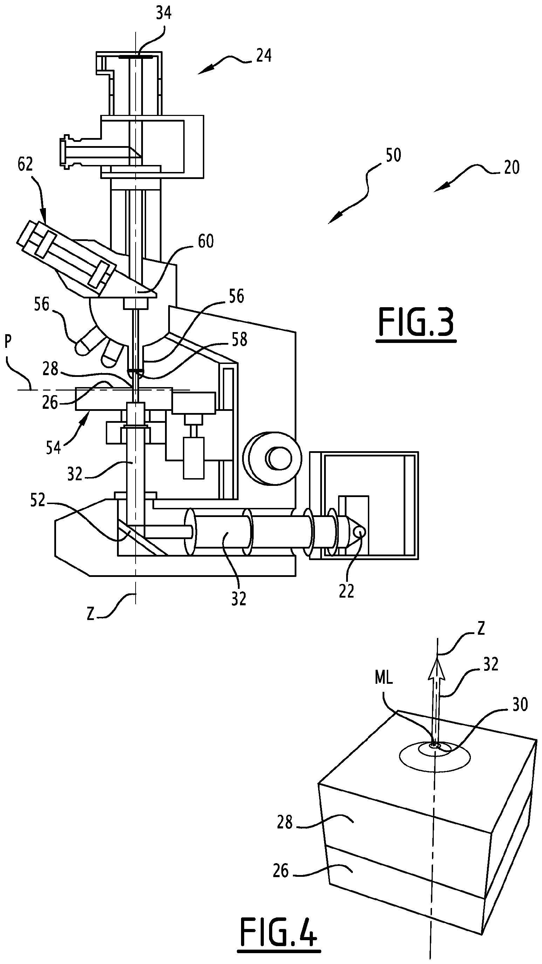

Les figures 3 à 17 illustrent un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, le système de détection optique 20 comprend un microscope 50 présentant un plan principal objet P perpendiculaire à une direction verticale Z.

Le microscope 50 comporte un miroir 52 propre à réfléchir le faisceau lumineux 32, issu de la source de lumière 22, en direction de la lame transparente 26 selon la direction verticale Z. Le microscope 50 comprend une platine de support 54 sur laquelle est disposée la lame transparente 26.

Dans l'exemple de réalisation de la figure 3, le microscope 50 comporte trois objectifs 56, chaque objectif 56 comportant une première lentille 58, également appelé lentille objectif.

En complément, le microscope 50 comporte un dispositif de séparation 60, tel qu'un prisme, et un oculaire 62, le dispositif de séparation 60 étant propre à diriger le rayonnement transmis à travers la lame transparente 26 et la composition 28, d'une part, vers l'oculaire 62, et d'autre part, vers le dispositif d'acquisition 24 comportant le photodétecteur matriciel 34.

La source de lumière 22 est connue en soi et adaptée au microscope 50.

Le dispositif d'acquisition 24 est analogue à celui du premier mode de réalisation, et comporte le photodétecteur matriciel 34, tel qu'un capteur CMOS ou un capteur CCD.

La lame transparente 26 est identique à celle du premier mode de réalisation, et préparée de manière analogue.

La composition 28 est identique à l'une quelconque de celles décrites pour le premier mode de réalisation.

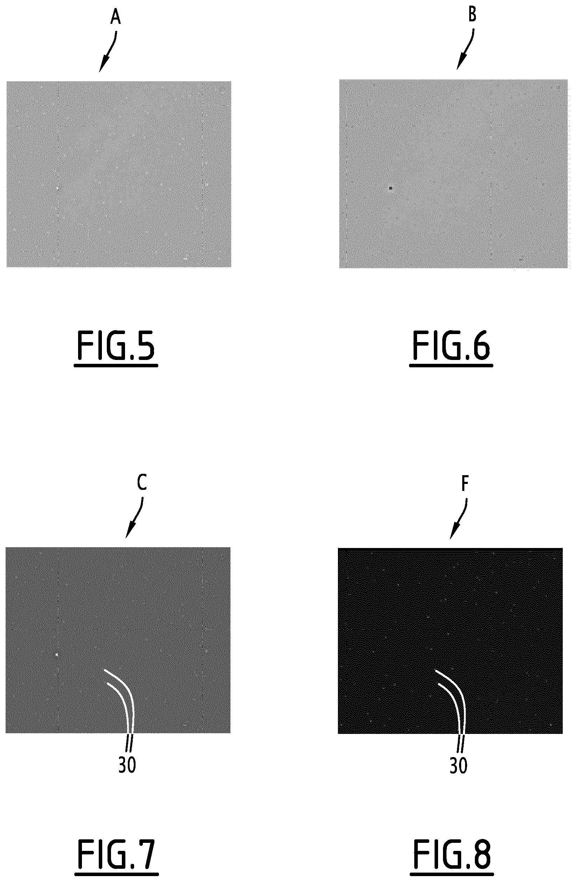

Selon le deuxième mode de réalisation, lors de l'étape d'acquisition, une première image A, visible sur les figures 5, 10 et 14, est acquise pour une première focalisation au-dessus du plan principal objet P du microscope 50. Les particules observées apparaissent alors sous la forme de points lumineux (pixels de niveaux de gris plus élevés que le fond). Une deuxième image B, visible sur les figures 6, 11 et 15, est acquise pour une deuxième focalisation au-dessous du plan principal objet P du microscope 50. Les particules observées apparaissent alors sous la forme de points sombres (pixels de niveaux de gris plus faibles que le fond) et une image résultante C, visible sur les figures 7, 12 et 16, est obtenue par soustraction de la deuxième image B à la première image A, afin d'améliorer le résultat d'acquisition.

La première focalisation et la deuxième focalisation sont, par exemple, sensiblement symétriques l'une de l'autre par rapport au plan principal objet P du microscope 50. La première focalisation est à une première altitude +Z₀ la deuxième focalisation est à une deuxième altitude -Z₀, avec la convention selon laquelle le plan principal objet du microscope 50 est à l'altitude nulle.

De manière identique au premier mode de réalisation, on observe la formation d'un film mouillant recouvrant les particules 30 lors de l'évaporation de la goutte de la composition 28, le film mouillant recouvrant la particule 30 jouant alors le rôle d'une microlentille ML, comme représenté sur la figure 4.

Le procédé de détection optique des particules 30 selon le deuxième mode de réalisation est analogue à celui du premier mode de réalisation décrit précédemment.

Dans l'exemple de réalisation des figures 5 à 17, es particules 30 présentent un diamètre sensiblement égal à 200 nm.

Dans l'exemple de réalisation des figures 5 à 7, le polymère hydrophile est le PEG 600, et le nombre n de motifs d'oxyéthylène est alors égal à 13.

La figure 8 est une image de référence F des mêmes particules 30 obtenue en imagerie de fluorescence à l'aide du microscope 50. La comparaison de l'image C de la figure 7 avec l'image de référence F de la figure 8 montre alors que la détection des particules 30 est particulièrement efficace, puisqu'on observe sensiblement les mêmes particules 30 sur les images C et F.

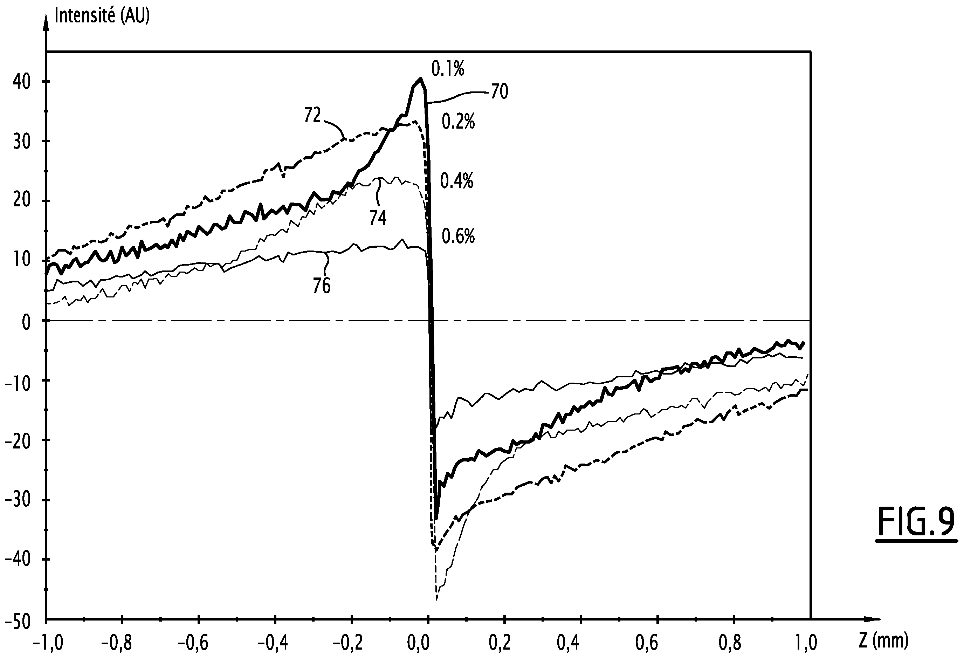

La figure 9 illustre différentes courbes 70, 72, 74, 76 représentant un profil d'intensité selon l'axe Z de focalisation de l'image acquise en fonction de la concentration massique du PEG 600, la concentration massique variant entre 0,1% et 0,6%. Pour chaque courbe 70, 72, 74, 76, l'intensité varie en fonction de la focalisation 26 par rapport au plan principal objet P selon la direction verticale Z.

Sur la figure 9, une première courbe 70 correspond à une concentration massique du PEG 600 égale à 0,1 %, une deuxième courbe 72 correspond à une concentration massique du PEG 600 égale à 0,2 %, une troisième courbe 74 correspond à une concentration massique du PEG 600 égale à 0,4 % et une quatrième courbe 76 correspond à une concentration massique du PEG 600 égale à 0,6 %.

Les quatre courbes 70, 72, 74, 76 montrent un saut d'intensité allant de niveaux de gris sombres à des niveaux de gris élevés, ce qui est caractéristique de la présence d'une lentille, et montre que le film mouillant obtenu lors de l'évaporation de la goutte de la composition 28 forme une microlentille.

La première courbe 70 montre un pic d'intensité, mais cette intensité décroît relativement vite lorsque la focalisation s'éloigne du plan objet. La deuxième courbe 72 présente un pic d'intensité plus atténué, mais décroît moins rapidement.

Le meilleur compromis entre l'intensité et la largeur du pic 70, 72, 74 et 76 est obtenu pour la deuxième courbe 72, et la concentration massique du PEG 600 égale à 0,2 % est donc une valeur préférentielle.

Ainsi, lorsque le polymère hydrophile est le PEG 600, la concentration massique choisie est préférentiellement comprise entre 0,2% et 0,8%. On estime que le film forme alors une lentille axicon. L'homme du métier notera également que la convexité de la lentille axicon est fonction de la concentration du polymère hydrophile.

Les avantages de ce deuxième mode de réalisation comprennent les avantages du premier mode de réalisation décrit précédemment.

Le deuxième mode de réalisation présente en outre l'avantage d'améliorer le rapport signal sur bruit de l'image acquise et de supprimer certains défauts dans l'image acquise, de par l'acquisition de la première image A pour la première focalisation en +Z₀, l'acquisition de la deuxième image B pour la deuxième focalisation en -Z₀, puis la soustraction de la deuxième image B à la première image A, comme représenté sur les figures 5 à 7.

En effet, la soustraction de la deuxième image B à la première image A permet d'obtenir une image résultante C présentant un meilleur contraste, et cette soustraction permet également de s'affranchir de la présence d'éléments parasites, tel que des particules diffractantes, de la poussière ou encore des microgouttes, se trouvant sur la lame 26 ou sur le chemin optique entre la lame 26 et le capteur 34. De telles particules forment un signal équivalent sur la première image A et la deuxième image B. On comprend alors que la soustraction de ces deux images A, B permet de s'affranchir de ces particules.

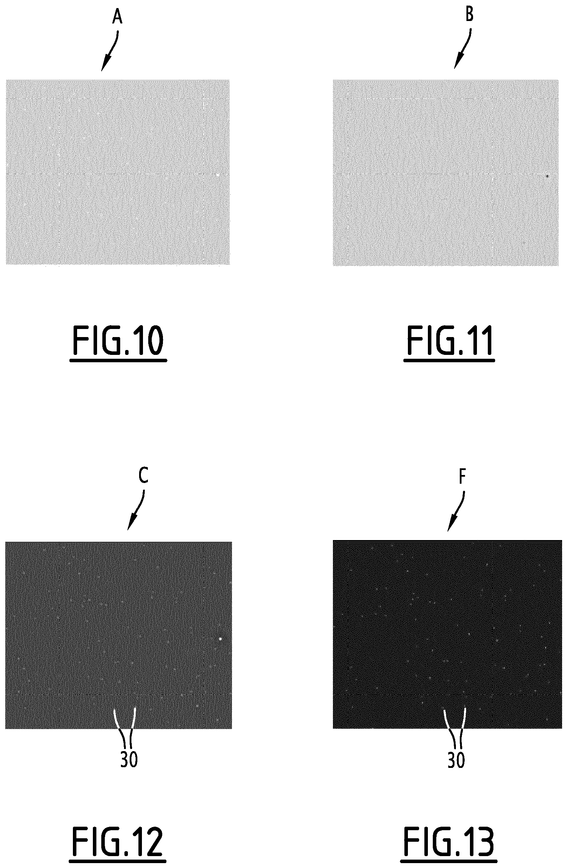

Les figures 10 à 12 représentent des vues analogues à celle des figures 5 à 7 pour un autre polymère hydrophile de la composition 28.

Dans l'exemple de réalisation des figures 10 à 12, le polymère hydrophile est le diéthylène glycol, noté DiEG. Autrement dit, le nombre n de motifs d'oxyéthylène est égal à 2.

De manière analogue aux figures 5 à 7, la figure 10 représente la première image A obtenue pour la première focalisation au-dessus du plan principal objet P, la figure 11 représente la deuxième image B obtenue pour la deuxième focalisation au-dessous du plan principal objet P du microscope 50, et la figure 12 représente l'image résultante C correspondant à la soustraction de la deuxième image B à la première image A.

La figure 13 représente l'image de référence F obtenue en imagerie de fluorescence à l'aide du microscope 50 pour les mêmes particules 30 que celles des figures 10 à 12.

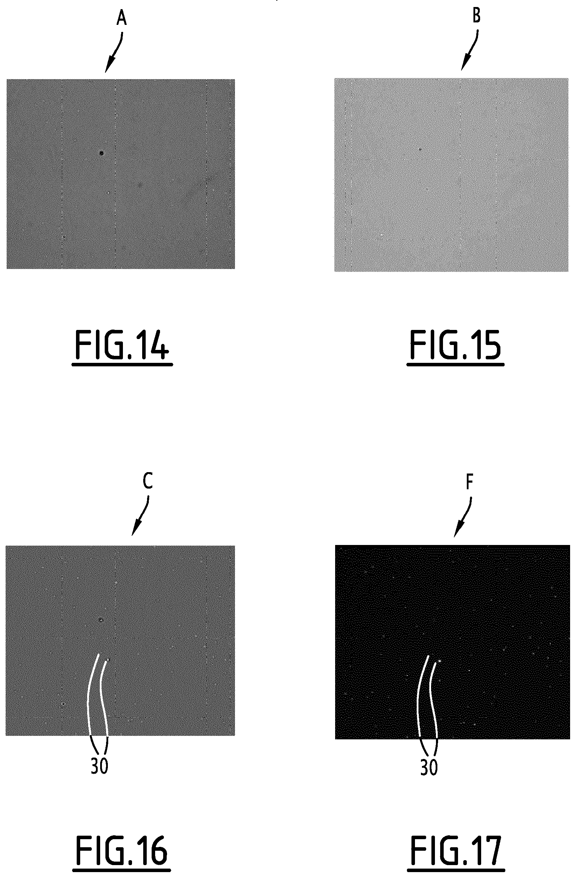

Les figures 14 à 16 représentent des vues analogues à celle des figures 5 à 7 et à celles des figures 10 à 12 pour un autre polymère hydrophile de la composition 28.

Dans l'exemple de réalisation des figures 14 à 16, le polymère hydrophile est le PEG 8000, c'est-à-dire le polyéthylène glycol avec le nombre n de motifs d'oxyéthylène égal à 180.

De manière analogue aux figures 5 à 7 et aux figures 10 à 12, la figure 14 représente la première image A, la figure 15 représente la deuxième image B et la figure 16 représente l'image C résultant de la soustraction de la deuxième image B à la première image A.

La figure 17 représente l'image de référence F obtenue, en imagerie de fluorescence à l'aide du microscope 50, pour les mêmes particules 30 que celles des figures 14 à 16.

Les différentes images résultantes C obtenues lorsque le polymère hydrophile est le PEG 600, le DiEG, ou encore le PEG 8000, comme représenté sur les figures 7, 12 et 16, montrent une très bonne détection optique des particules 30 bien que celles-ci présentent un diamètre de valeur très faible, tel qu'un diamètre égal à 200 nm.

En effet, la comparaison de chaque image résultante C avec l'image de référence F correspondante montre que la détection des particules 30 est particulièrement efficace, puisqu'on observe à chaque fois sensiblement les mêmes particules 30 sur les images C et F. Autrement dit, les particules détectées 30 sont sensiblement les mêmes si on compare les figures 7 et 8, respectivement les figures 12 et 13, respectivement encore les figures 16 et 17.

Avec la composition 28 selon l'invention, la goutte s'étale avec l'angle de contact α de l'ordre du degré, et le film mouillant reste stable pendant une durée plus longue qu'avec la composition de l'état de la technique de par la présence du polymère hydrophile.

L'ajustement de la concentration massique du polymère hydrophile, telle qu'une concentration massique comprise entre 0,2 % et 0,8 % pour le PEG 600, permet également d'améliorer le rapport signal sur bruit de l'image acquise par le dispositif d'acquisition 24.

En outre, l'acquisition des première et deuxième images A, B, puis la soustraction de la deuxième image B à la première image A permet d'obtenir une image résultante C présentant un meilleure contraste et d'améliorer encore la détection des particules 30.

La soustraction de la deuxième image B à la première image A permet également de s'affranchir de la présence d'éléments parasites, tel que des particules diffractantes, de la poussière ou encore des microgouttes, se trouvant dans le plan principal objet P.

Le système de détection 20 selon l'invention permet alors de détecter des particules présentant un diamètre de l'ordre de 200 nm par imagerie sans lentille, c'est-à-dire en l'absence d'une optique de grossissement disposée entre la source de lumière 22 et la lame 26 ou bien entre la lame 26 et le dispositif d'acquisition 24. Des particules de diamètre d'environ 100 nm ont également été observées. Une telle détection de particule est également obtenue en l'absence de marqueur, tel que des marqueurs fluorescents.

Le système de détection 20 selon l'invention est donc simple à mettre en œuvre et peu coûteux, tout en offrant une détection très efficace des particules 30.

On conçoit ainsi que le système de détection optique 20 selon l'invention permet d'améliorer la détection des particules 30 par rapport au système de détection de l'état de la technique.

Suivant un autre aspect, une composition pour la détection optique de particules est décrite, la composition étant destinée à être agencée sur une lame transparente pour l'acquisition d'au moins une image des particules à l'aide d'un système de détection optique, la composition comprenant de l'eau, les particules et un surfactant, les particules présentant un diamètre de préférence inférieur à 10 µm et notamment de diamètre inférieur à 1 µm, le surfactant présentant une concentration de préférence au moins égale à la concentration micellaire critique (CMC),
dans laquelle la composition comprend en outre un polymère hydrophile, le polymère hydrophile présentant une température d'ébullition supérieure à celle de l'eau.

En complément et de manière facultative, la composition comprend une ou plusieurs des caractéristiques suivantes, prises isolément ou suivant toutes les combinaisons techniquement possibles :
- le polymère est un polyéthylène glycol défini par la formule suivante :

   H(-OCH₂CH₂-)ₙOH

   où n représente le nombre de motifs d'oxyéthylène du polymère ;
- le nombre n de motifs d'oxyéthylène est un nombre entier compris entre 2 et 180, de préférence compris entre 4 et 16, de préférence encore égal à 13 ;
- le nombre n de motifs d'oxyéthylène est égal à 13, et le polymère hydrophile présente une concentration massique comprise entre 0,2 % et 0,8 %, de préférence comprise entre 0,4 % et 0,6 % ; et
- le surfactant comporte du polyoxyéthylène 20 sorbitan monolaurate.

## Revendications

1. Système (20) de détection optique de particules (30), le système (20) comprenant une lame transparente (26), une composition (28) agencée sur la lame transparente (26), une source de lumière (22) propre à éclairer la composition (28) et la lame (26), et un dispositif (24) d'acquisition d'au moins une image (A, B) de la composition (28) éclairée par la source de lumière (22), la lame transparente (26) étant disposée entre la source de lumière (22) et le dispositif d'acquisition (24),
**caractérisé en ce que** la composition (28) comprend de l'eau, les particules (30), un surfactant et un polymère hydrophile, les particules (30) présentant un diamètre de préférence inférieur à 10 µm, de préférence encore inférieur à 1 µm, le surfactant présentant une concentration de préférence au moins égale à la concentration micellaire critique, le polymère hydrophile présentant une température d'ébullition supérieure à celle de l'eau,
le polymère est un polyéthylène glycol défini par la formule suivante :
H(-OCH₂CH₂-)ₙOH
où n représente le nombre de motifs d'oxyéthylène du polymère, le nombre n de motifs d'oxyéthylène étant un nombre entier compris entre 2 et 180.

2. Système (20) selon la revendication 1, dans lequel le nombre n de motifs d'oxyéthylène est compris entre 4 et 16, de préférence égal à 13.

3. Système (20) selon la revendication 2, dans lequel le nombre n de motifs d'oxyéthylène est égal à 13, et le polymère hydrophile présente une concentration massique comprise entre 0,2 % et 0,8 %, de préférence comprise entre 0,4 % et 0,6 %.

4. Système (20) selon l'une quelconque des revendications précédentes, dans lequel le surfactant comporte du polyoxyéthylène 20 sorbitan monolaurate.

5. Procédé de détection optique de particules (30), les particules présentant un diamètre de préférence inférieur à 10 µm, de préférence encore inférieur à 1 µm,
le procédé comprenant les étapes suivantes :
- l'agencement sur une lame transparente (26) d'une composition (28) comprenant de l'eau, les particules (30) et un surfactant, le surfactant présentant une concentration de préférence au moins égale à la concentration micellaire critique (CMC),
- l'acquisition d'au moins une image (A, B) des particules à l'aide d'un système de détection optique, (20)
le procédé étant **caractérisé en ce que** la composition comprend en outre un polymère hydrophile, le polymère hydrophile présentant une température d'ébullition supérieure à celle de l'eau,
le polymère est un polyéthylène glycol défini par la formule suivante :
H(-OCH₂CH₂-)ₙOH
où n représente le nombre de motifs d'oxyéthylène du polymère, le nombre n de motifs d'oxyéthylène étant un nombre entier compris entre 2 et 180.

6. Procédé selon la revendication 5, dans lequel le nombre n de motifs d'oxyéthylène est compris entre 4 et 16, de préférence égal à 13.

7. Procédé selon la revendication 5 ou 6, dans lequel le système de détection optique (20) comprend un microscope (50) présentant un plan principal objet (P) perpendiculaire à une direction verticale (Z), et
dans lequel, lors de l'étape d'acquisition, une première image (A) est acquise pour une première focalisation (+Z₀) au-dessus du plan principal objet (P) du microscope, une deuxième image (B) est acquise pour une deuxième focalisation (-Z₀) au-dessous du plan principal objet (P) du microscope (50), et la deuxième image (B) est soustraite à la première image (A).

8. Procédé selon la revendication 7, dans lequel la première focalisation (+Z₀) et la deuxième focalisation (-Z₀) sont sensiblement symétriques l'une de l'autre par rapport au plan principal objet (P) du microscope (50).

## Patentansprüche

1. System (20) zum optischen Detektieren von Partikeln (30), wobei das System (20) aufweist einen transparenten Objektträger (26), eine Zusammensetzung (28), welche auf den transparenten Objektträger (26) aufgebracht ist, eine Lichtquelle (22), die dazu geeignet ist, die Zusammensetzung (28) und den Objektträger (26) zu beleuchten, und eine Vorrichtung (24) zum Aufnehmen wenigstens eines Bilds (A, B) der Zusammensetzung (28), die durch die Lichtquelle (22) beleuchtet ist, wobei der transparente Objektträger (26) zwischen der Lichtquelle (22) und der Aufnahmevorrichtung (24) angeordnet ist,
**dadurch gekennzeichnet, dass** die Zusammensetzung (28) aufweist Wasser, die Partikel (30), ein oberflächenaktives Mittel und ein hydrophiles Polymer, wobei die Partikel (30) einen Durchmesser von vorzugsweise kleiner als 10 µm, noch bevorzugter kleiner als 1 µm, haben, das oberflächenaktive Mittel eine Konzentration von vorzugsweise wenigstens gleich der kritischen Mizellenkonzentration hat, das hydrophile Polymer eine Siedetemperatur größer als die von Wasser hat,
wobei das Polymer ein Polyethylenglykol ist, das mittels der folgenden Formel definiert ist:
H(-OCH₂CH₂-)ₙOH
wobei n die Anzahl der Oxyethylenmotive des Polymers darstellt, wobei die Anzahl n der Oxyethylenmotive eine ganze Zahl zwischen 2 und 180 ist.

2. System (20) gemäß Anspruch 1, wobei die Anzahl n der Oxyethylenmotive zwischen 4 und 16, vorzugsweise gleich 13, ist.

3. System (20) gemäß Anspruch 2, wobei die Anzahl n der Oxyethylenmotive gleich 13 ist und das hydrophile Polymer eine Massenkonzentration zwischen 0,2% und 0,8%, vorzugsweise zwischen 0,4% und 0,6%, hat.

4. System (20) gemäß irgendeinem der vorangegangenen Ansprüche, wobei das oberflächenaktive Mittel Polyoxyethylen-20-sorbitanmonolaurat aufweist.

5. Verfahren zum optischen Detektieren von Partikeln (30), wobei die Partikel einen Durchmesser von vorzugsweise kleiner als 10 µm, noch bevorzugter von kleiner als 1µm, haben,
wobei das Verfahren die folgenden Schritte aufweist:
- Auftragen auf einen transparenten Objektträger (26) einer Zusammensetzung (28), welche Wasser, die Partikel (30) und ein oberflächenaktives Mittel aufweist, wobei das oberflächenaktive Mittel eine Konzentration von vorzugsweise wenigstens gleich der kritischen Mizellenkonzentration (CMC) aufweist,
- Aufnehmen von wenigstens einem Bild (A, B) von Partikeln mit Hilfe eines Systems zum optischen Detektieren (20),
wobei das Verfahren **dadurch gekennzeichnet ist, dass** die Zusammensetzung weiterhin ein hydrophiles Polymer aufweist, wobei das hydrophile Polymer einen Siedepunkt höher als der von Wasser hat,
wobei das Polymer ein Polyethylenglykol ist, das mittels der folgenden Formel definiert ist:
H(-OCH₂CH₂-)ₙOH
wobei n die Anzahl der Oxyethylenmotive des Polymers darstellt, wobei die Anzahl n der Oxyethylenmotive eine ganze Zahl zwischen 2 und 180 ist.

6. Verfahren gemäß Anspruch 5, wobei die Anzahl n der Oxyethylenmotive zwischen 4 und 16, vorzugsweise gleich 13, ist.

7. Verfahren gemäß Anspruch 5 oder 6, wobei das System zum optischen Detektieren (20) ein Mikroskop (50) aufweist, das eine Hauptobjektebene (P) rechtwinklig zu einer vertikalen Richtung (Z) hat, und
wobei, während des Schritts des Aufnehmens, ein erstes Bild (A) für eine erste Fokussierung (+Z₀) über der Hauptobjektebene (P) des Mikroskops aufgenommen wird, ein zweites Bild (B) für eine zweite Fokussierung (-Z₀) unter der Hauptobjektebene (P) des Mikroskops (50) aufgenommen wird und das zweite Bild (B) vom ersten Bild (A) subtrahiert wird.

8. Verfahren gemäß Anspruch 7, wobei die erste Fokussierung (+Z₀) und die zweite Fokussierung (-Z₀) zueinander in etwa symmetrisch sind bezogen auf die Hauptobjektebene (P) des Mikroskops (50).

## Claims

1. A system (20) for detecting optical particles (30), the system (20) comprising a transparent slide (26), a composition (28) arranged on the slide (26), a light source (22) able to light the composition (28) and the slide (26), and a device (24) for acquiring at least one image (A, B) of the composition (28) lit by the light source (22), the transparent slide (26) being positioned between the light source (22) and the acquisition device (24),
**characterized in that** the composition (28) comprises water, the particles (30), a surfactant and a hydrophilic polymer, the particles (30) having a diameter preferably smaller than 10 µm, still more preferably smaller than 1 µm, the surfactant having a concentration preferably at least equal to the critical micellar concentration, the hydrophilic polymer having a boiling temperature higher than that of water,
the polymer is a polyethylene glycol defined by the following formula:
H(-OCH₂CH₂-)ₙOH
where n represents the number of oxyethylene patterns of the polymer, the number n of oxyethylene patterns being an integer comprised between 2 and 180.

2. The system (20) according to claim 1, wherein the number n of oxyethylene patterns is comprised between 4 and 16, preferably equal to 13.

3. The system (20) according to claim 2, wherein the number n of oxyethylene patterns is equal to 13, and the hydrophilic polymer has a weight concentration comprised between 0.2% and 0.8%, preferably comprised between 0.4% and 0.6%.

4. The system (20) according to any one of the preceding claims, wherein the surfactant comprises polyoxyethylene 20 sorbitan monolaurate.

5. A method for detecting optical particles (30), the particles having a diameter preferably smaller than 10 µm, still more preferably smaller than 1 µm,
the method comprising the following steps:
- arranging, on a transparent slide (26), a composition (28) comprising water, the particles (30) and a surfactant, the surfactant having a concentration preferably at least equal to the critical micellar concentration (CMC),
- acquiring at least one image (A, B) of the particles with an optical detection system (20),
the method being **characterized in that** the composition further comprises a hydrophilic polymer, the hydrophilic polymer having a boiling temperature higher than that of water,
the polymer is a polyethylene glycol defined by the following formula:
H(-OCH₂CH₂-)ₙOH
where n represents the number of oxyethylene patterns of the polymer, the number n of oxyethylene patterns being an integer comprised between 2 and 180.

6. The method according to claim 5, wherein the number n of oxyethylene patterns is comprised between 4 and 16, preferably equal to 13.

7. The method according to claim 5 or 6, wherein the optical detection system (20) comprises a microscope (50) having a main object plane (P) perpendicular to a vertical direction (Z), and
wherein, during the acquisition step, a first image (A) is acquired for a first focus (+Z₀) above the main object plane (P) of the microscope, a second image (B) is acquired for a second focus (-Z₀) below the main object plane (P) of the microscope (50), and the second image (B) is subtracted from the first image (A).

8. The method according to claim 7, wherein the first focus (+Z₀) and the second focus (-Z₀) are substantially symmetrical to each other relative to the main object plane (P) of the microscope (50).
